# EUROPEAN PATENT APPLICATION

(11) **EP 3 016 057 A1**
(43) Date of publication of application: **04.05.2016**
(21) Application number: 15191340.7
(22) Date of filing: 23.10.2015
(51) Int. Cl.: G06Q 40/00

(54) **A METHOD FOR THE PURCHASE AND SALE OF A TRADED SECURITY AND A FRACTIONAL RIGHT BASED THEREON**

(30) Priority: 27.10.2014 ZA 201407809
(71) Applicant: First World Trader (Pty) Ltd, 2196 Sandton (ZA)
(72) Inventor: Savage,, Charles, 2196 Sandton (ZA); Jansen Van Vuuren,, Paul, 2196 Sandton (ZA)
(74) Representative: Adamson Jones

(57) **Abstract**

The invention provides a method for the purchase and sale of a traded security and a fractional right based on the security by a subscriber by: display of at least one actuable icon on a subscriber interface when linking the subscriber interface in electronic communication with a system server, which icon is at least representative of a value constant buy instruction for a traded security; generation of a proforma order by the system server on actuating the icon, which proforma order is communicated to the subscriber interface, and which proforma order is based on the value constant of the buy instruction; interrogation of a pricing database by the system server to receive a current price for the security when the proforma order is accepted on the subscriber interface; calculation of a unit amount and a fractional amount by the system server by dividing the value constant of the buy instruction by the current price; generation of a subscriber order by the system server, which order accrues to the benefit of the subscriber after payment; allocation by the server to the subscriber order of units of the security equal to the unit amount; and provision by the server of a monetary value to the fractional amount by tracking the price of the security, on communicating with the pricing database, which value is based pro-rata on the current price of a unit of the security.

## Description

### BACKGROUND OF THE INVENTION

The invention relates to a system and method for trading in securities and parts thereof. More particularly, the invention relates to online investment platform for buying and selling securities and fractional securities.

Retail investors are faced with numerous problems, including: high trading costs, difficulty in understanding the process of investments and securities prices which are unaffordable to the retail market.

Concerning trading and investment platforms, the norm is to charge a plethora of fees including a minimum brokerage fee, fees due to settlement, clearing and custody agencies, as well as a monthly usage fee. Another cost is the tax consequence of the transaction.

Coupled with the problem of the cost barrier is a general lack of education around investing in listed securities, which is specifically marked within lower income classes and in emerging economies.

An additional barrier to entry facing lower income earners is the high price of single units of these securities. If the price of a single security cannot match the means of lower income earners, they will be forced to invest either in securities with a low unit price, which often comes with exposure to more risk, or to invest in cash, which yields returns that are too low to sustain growth and retirement.

Therefore, it is essential to expose people to listed securities; especially those people with the most need i.e. lower income earners, as participation in this asset class has proven returns that significantly exceed investing in cash.

The invention at least partially addresses the aforementioned problems.

### SUMMARY OF INVENTION

Hereinafter "traded security" means any security, or derivative thereof, that is traded either on a formal or centralized exchange or Over-The-Counter, via a dealer network.

Hereinafter "a risk management interface" means an interface at which orders for the purchase and sale of a security are received, an inventory of the security is made available and which is in communication with an exchange or intermediary to buy or sell the security and at which a balance between orders and inventory of a security is risk assessed and a decision to buy or sell is made.

The invention provides a method for the purchase and sale of a traded security and a fractional right based on the security by a subscriber by:
a) display of at least one actuable icon on a subscriber interface when linking the subscriber interface in electronic communication with a system server, which icon is at least representative of a value constant buy instruction for a traded security;
b) generation of a proforma order by the system server on actuating the icon, which proforma order is communicated to the subscriber interface, and which proforma order is based on the value constant of the buy instruction;
c) interrogation of a pricing database by the system server to receive a current price for the security when the proforma order is accepted on the subscriber interface;
d) calculation of a unit amount and a fractional amount by the system server by dividing the value constant of the buy instruction by the current price;
e) generation of a subscriber order by the system server, which order accrues to the benefit of the subscriber after payment;
f) allocation by the server to the subscriber order of units of the security equal to the unit amount; and
g) provision by the server of a monetary value to the fractional amount by tracking the price of the security, on communicating with the pricing database, which value is based pro-rata on the current price of a unit of the security.

The user interface may be anyone of the following: a PC, a tablet, a mobile or cellular telephone, an ATM and a POS.

The value constant buy instruction may be a value that is constant over a period of time, irrespective of a change in the actual price of the traded security, and which value constant buy instruction may be less than the current price of the unit of the security price of the traded security.

The system server may assign a unique designator to the subscriber order.

The system server may separately account for the unit amount and the fractional amount of the subscriber order.

The system server may generate an invoice based on the subscriber order which is communicated to the user interface.

The system server may periodically interrogate an inventory database to match the subscriber order with the inventory of the security and to allocate the units of the security in fulfilment of the order.

The system server may communicate the order to a risk management interface for possible purchase of the security to ensure the units of the security are available for allocation.

By ascribing a monetary value to the fractional amount in step (g) the fractional right is provided.

The invention extends to an automated security purchase system for enabling the purchase of a traded security and a fraction right based on the security, which system includes a system server which is in electronic communication with each of at least one subscriber interface, a risk management interface, an inventory database and a pricing database, and wherein the at least one subscriber interface is enabled by electronic communication with the server to display at least one actuable icon representative of a value constant buy instruction for the traded security.

The value constant buy instruction may be a value that is constant over a period of time, irrespective of a change in the actual price of the traded security, and which value constant buy instruction may be less than the unit price of the traded security.

The user interface may be anyone of the following: a PC, a tablet, a mobile or cellular telephone, an ATM and a POS.

The inventory database may be a database that the system server looks to for information on what traded securities are available in stock and in what amounts.

The pricing database may be a database that the system looks to for information on the current prices of traded securities.

### BRIEF DESCRIPTION OF THE DRAWINGS

The invention is further described by way of examples with reference to the accompanying drawings in which:

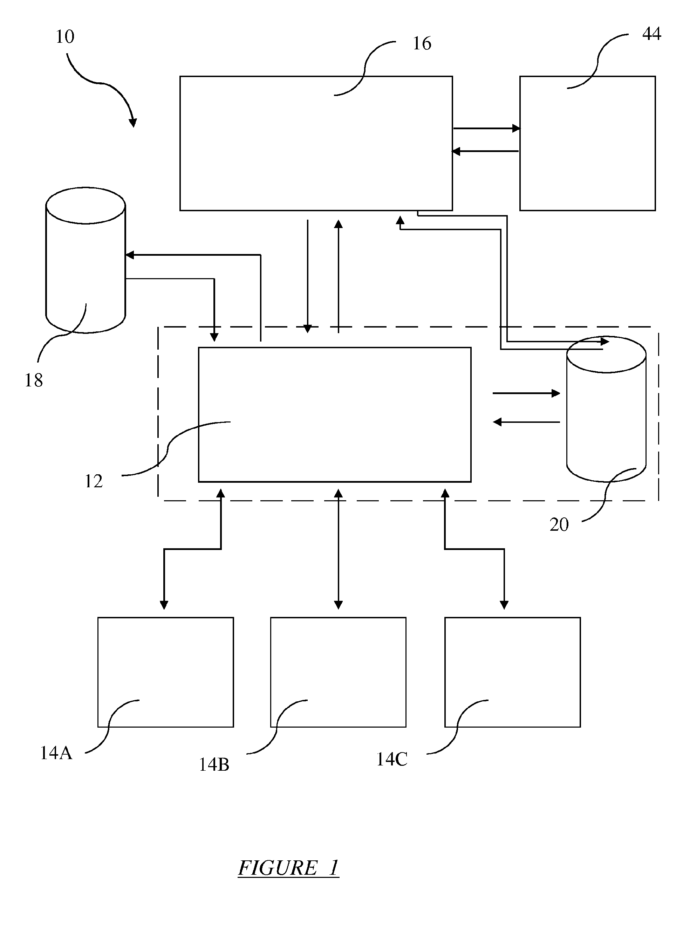

Figure 1 is a flow diagram representative of the components making up a computerized system in accordance with the invention; and
Figures 2 to 6 are screen shots of what is displayed on a subscriber interface when in electronic communication with a system server of the system and employing the method of the invention.

### DESCRIPTION OF PREFERRED EMBODIMENT

The invention provides a system 10 to enable a user of the system to buy or sell a security available on an exchange, or a fractional right based on the security.

The invention provides a method for the purchase of a traded security and a fractional right based thereon, and to a system 10 which is automated and which supports and employs the method.

The method is equally relevant to the sale of a traded security and a fractional right based thereon, however for ease of explanation, what follows will be a description of the method confined to purchase.

The system 10 includes a system server 12, which has a central unit, and which is in electronic communication, at the front end, to a plurality of subscriber interfaces 14A, 14B and 14C. The interfaces can be any one of a PC, cellular phone, tablet, ATM and a POS.

At backend, the server 12 is in electronic communication with a risk management interface 16, an off-site pricing database 18 and an on-site or proprietary inventory database 20.

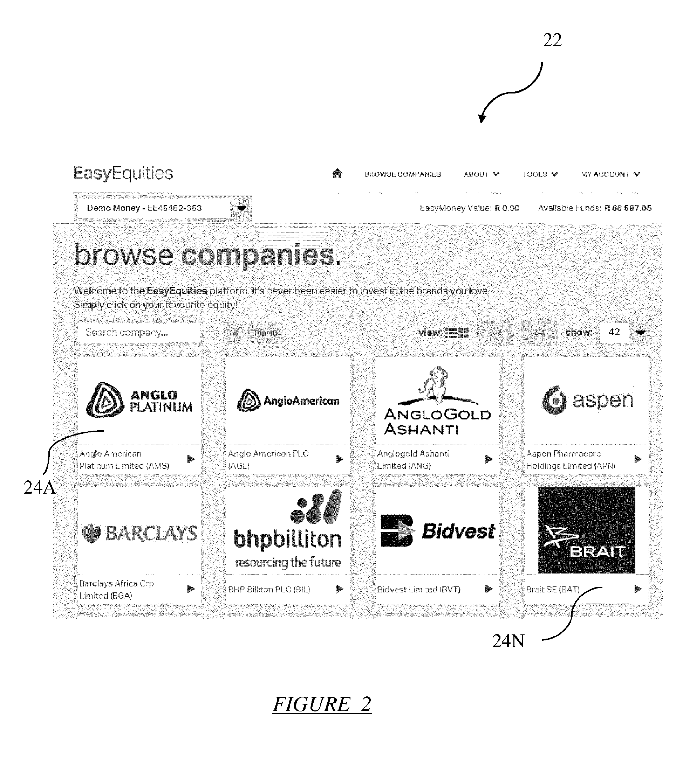

Enabled by electronic communication with the server 12, which is typically an internet link, the subscriber interface 14 displays one or more webpages generated by the system server 12 and which are illustrated in Figures 2 to 6, each of which are described in greater detail below and each of which are representative of one or more steps of the method of the invention.

When first communicating with the system server 12, the subscriber interface 14 will display a first webpage 22, illustrated in Figure 2. The webpage includes a number of actuable icons (respectively designated 24A, 24B ... 24N), each of which represents a particular company whose securities are available for trade (purchase and sale).

If a particular company interests the subscriber, actuating the relevant icons 24 or will cause the server 12 to generate the display of a second webpage 26 on the subscriber interface 14.

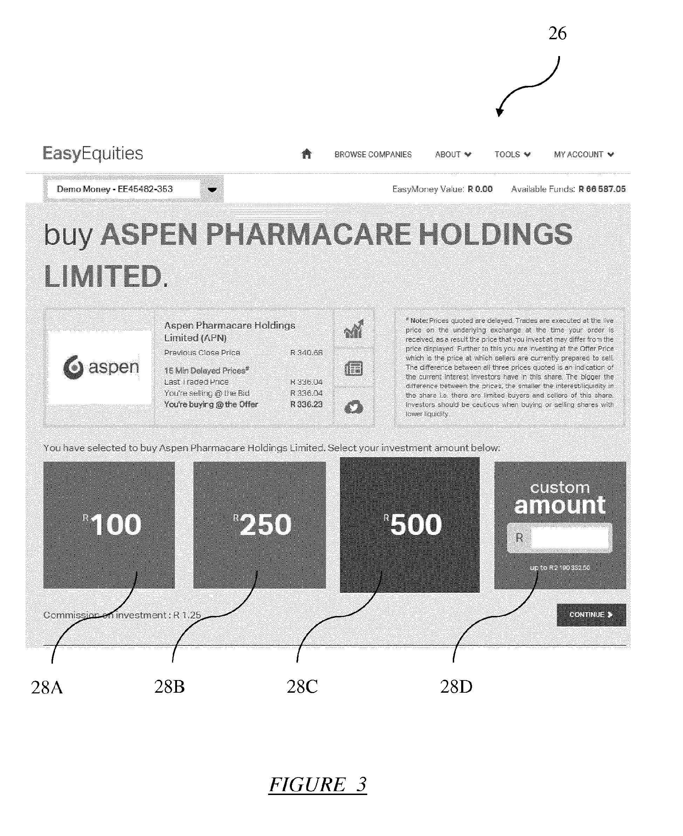

This webpage 26 (see Figure 3) includes a plurality of actuable icons (respectively designated 28A, 28B, 28C and 28D), each representing a value constant buy instruction for a traded security of the company pre-selected. In this example, that company is ASPEN. In this example, the value constant of the buy instructions are R100.00, R250.00 and R500.00 respectively.

The value constraint buy instruction can, however, be any value that is constant over a period of time, irrespective of the changing price of a unit of the security represented. Furthermore, the value constant buy instruction can be less than the unit price of the traded security thus providing an opportunity, to the subscriber, to expose himself to the security without having to pay the unit price which is very often out of reach of the lower income earner.

The icon 28D is in an input bar into which a subscriber can input a custom rand value that is not bespoke available.

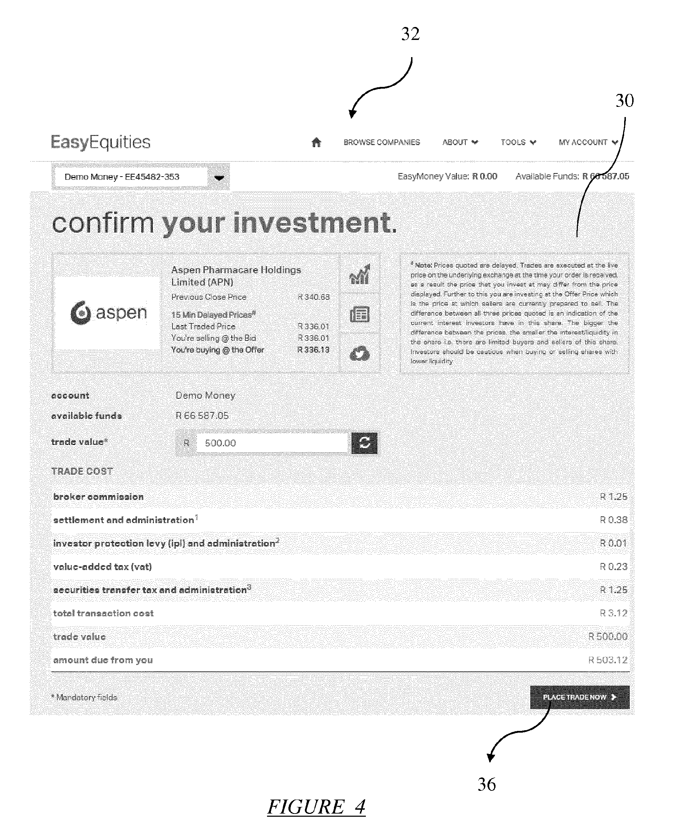

If, for example, the subscriber was to actuate the "R500.00" icon (28C), that actuation would elicit communication to the server 12 whereby the server 12 would take it that the subscriber wishes to purchase R500.00 worth of value of the particular security, being ASPEN. The server 12 would generate a proforma order 30, displayed on the subscriber interface 14, as a third webpage 32 (see Figure 4).

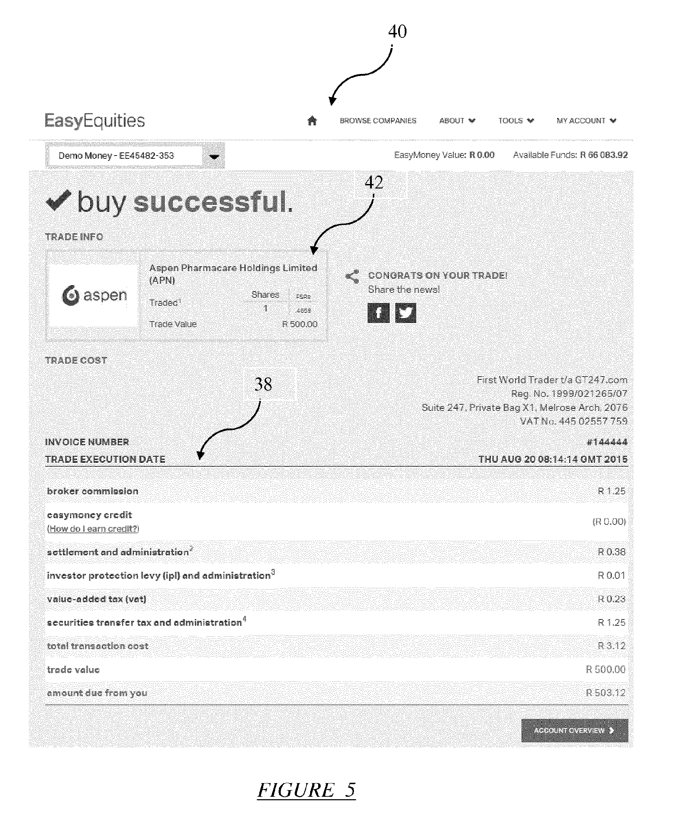

This proforma order 30 sets out the trade value, being R500.00, and the costs associated with the trade. A "place trade now" icon 36 is displayed on this webpage and, if actuated, will confirm the trade as an order whereby the server 12 will interrogate the pricing database 18, fetch a current price for a unit of the security which, in this particular example will be, for ASPEN, R336.49 per share (see Figure 5). With the server's processing capacity, the server 12 will make a calculation, by dividing the value constant of the buy instruction (i.e.R500.00) by the unit price (i.e. R336.49) to arrive at a unit amount and a fractional amount. In the example, the unit amount is "1" and the fractional amount is ".4859".

The system server 12 will then generate an order, and an invoice 38 based thereon, and display this on the subscriber interface 14 as a fourth webpage 40 (see Figure 5).

In the order, the unit amount and the fractional amount are separately accounted. This is evident, in this particular example, in a "trade info" box 42 wherein the unit amount and the fractional amount are displayed as "1", and headed "shares", and ".4859" and headed "FSRS" respectively. FSRS is an acronym for fractional share rights.

Depending on the business model employed, the amount of the invoice 35 can be paid, whilst online, accessing the system server 12 from the subscriber interface 14, by debit or credit card information input at a stage between the generation of the proforma order 30 and the acceptance thereof leading to the order. Alternatively, the model can be a prepaid model where a prepaid amount, to the credit of the subscriber, can be deducted at the time of the order generation.

The method of the invention is characterised in that:

The system server 12 in communication with the risk management interface 16, and interrogating the inventory database 20, will send the order to the risk management interface, and update the inventory database 20 with the order to the benefit of the subscriber.

A risk manager, manning the risk management interface 16, and also in communication with the inventory database 20, will assess if it is necessary to "go to market" to purchase the single unit of the security to match the unit amount of the order, if the inventory held by the proprietors of the system 10 is insufficiently stocked with this particular security, and if purchasing of the security is necessary. This is done directly by communication with the relevant exchange 44, or either directly through an intermediary.

In employing the method, the unit amount of the order is always matched with actual units or shares of the security. The security is allocated and notionally delivered to the subscriber in ownership.

The fractional amount is dealt with very differently. The system proprietor can choose to aggregate all the fractional amounts received from a plurality of subscribers for a particular security, at regular intervals (preferably daily), and go to market to obtain shares of the security, this is done merely to mitigate risk and obtain cover.

The subscriber, in this case the holder of an ASPEN linked fractional amount (.4859), is never the owner of a share or fraction of a share. He merely holds a right to claim a rand value that is a .4859 fraction of the unit price of the security and for that rand value to track the price of the security, pro-rata. Thus, the subscriber gets the economic benefit of the underlying shares although the fractional amount, and the rand value it presents, is insufficient to purchase a whole unit / share of the security. The economic benefit extends to enjoying, pro-rata, and any dividends payable in respect of the security. The system server 12 therefore separately accounts for, and deals with, the unit amount of the order and the fractional amount of the order.

## Claims

1. A method for the purchase of a traded security and a fractional right based on the security by a subscriber by:
a) display of at least one actuable icon on a subscriber interface when linking the subscriber interface in electronic communication with a system server, which icon is at least representative of a value constant buy instruction for a traded security;
b) generation of a proforma order by the system server on actuating the icon, which proforma order is communicated to the subscriber interface, and which proforma order is based on the value constant of the buy instruction;
c) interrogation of a pricing database by the system server to receive a current price for the security when the proforma order is accepted on the subscriber interface;
d) calculation of a unit amount and a fractional amount by the system server by dividing the value constant of the buy instruction by the current price;
e) generation of a subscriber order by the system server, which order accrues to the benefit of the subscriber on payment;
f) allocation by the server to the subscriber order of units of the security equal to the unit amount; and
g) provision by the server of a monetary value to the fractional amount by tracking the price of the security, on communicating with the pricing database, which value is based pro-rata on the current price of a unit of the security.

2. A method according to claim 1 wherein the user interface is anyone of the following: a PC, a tablet, a mobile or cellular telephone, an ATM and a POS.

3. A method according to claim 1 or 2 wherein the value constant buy instruction is a value that is constant over a period of time, irrespective of a change in the actual price of the traded security.

4. A method according to claim 3 wherein the value constant buy instruction is less than the current price of the unit of the security.

5. A method according to anyone of claims 1 to 4 wherein the system server assigns a unique designator to the subscriber order.

6. A method according to any one of claims 1 to 5 wherein the system server generates an invoice based on the order and which invoice is communicated to the user interface.

7. A method according to any one of claims 1 to 6 wherein the system server periodically interrogates an inventory database to match the subscriber order with the inventory of the security and to allocate the units of the security in fulfilment of the order.

8. A method according to any one of claims 1 to 7 wherein the system server communicates the subscriber order to a risk management interface for possible purchase of the security to ensure the units of the security are available for allocation.
